(19) Europäisches Patentamt
European Patent Office
Office européen des brevets

(11) **EP 4 440 013 A1**

(12) **EUROPEAN PATENT APPLICATION**

(43) Date of publication:
**02.10.2024 Bulletin 2024/40**

(21) Application number: **23165962.4**

(22) Date of filing: **31.03.2023**

(51) International Patent Classification (IPC):
*H04L /*(2006.01)

(52) Cooperative Patent Classification (CPC):
**H04L 65/611; H04L 65/61; H04L 65/612;
H04L 65/765; H04L 69/28; H04W 4/06;** H04L 67/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **MULTICAST JOIN METHOD**

(57) A method relating to a proxy re-joining a multicast channel having already left it, or joining a multicast channel for the first time, in order to deliver content segments to a client device. The method employs two timers - a first and second timer, where the second timer is longer than the first. Both timers start counting down once a proxy determines that there is a multicast channel available to join, and starts receiving content requests from the client device over unicast. Those requests are fulfilled by the proxy forwarding the requests to a content server, receiving content in response over unicast and forwarding it to the client device. If the requested content is also found to be available on the multicast channel, then the first timer is restarted. If the first timer reaches zero, first and second timers are restarted. However, if the second timer reaches zero, then the proxy joins the multicast channel and fulfils content requests from the client using content received over multicast.

Key

102 Content Source
104 Content Encoder
106 Multicast Transmitter
110 Unicast Server
112 Proxy
114 Client Device

Content Production
Bi-directional unicast
Uni-directional multicast

**Figure 1**

**Description**

**Field of the Invention**

This invention relates to the field of managing of the joining of a multicast channel.

**Background to the Invention**

Video content is currently commonly delivered to a range of client devices using unicast delivery, where a single stream of data is transmitted to each individual client device. Web (HTTP) technology is used for the content delivery, where the content is segmented into short content segment files, typically around six to ten seconds in duration, enabling each content segment file to be requested by and delivered to the client device using HTTP.

Each content segment may also be encoded at a set of quality levels, each with a different bit rate and hence different file size. The client device monitors its buffer level and the network throughput achieved, and determines from these at which quality to request the next content segment in order to achieve a good compromise between media quality and timely delivery. This is commonly referred to as adaptive bitrate (ABR) streaming.

However, HTTP is delivered over unicast (one to one) transport, so is inefficient for delivering the same content at the same time to many client devices. Multicast (one to many) transport would be far more efficient. Yet multicast is currently rarely used for any services other than network operators' on-net linear video channels delivered to their own set-top boxes. The main reason for this is that multicast does not lend itself to open use on the Internet.

To bring the benefits of multicast scalability to HTTP-based Internet media streaming, a class of techniques known as Multicast-Adaptive Bitrate (m-ABR) is being investigated and standardised.

Multicast-Adaptive Bitrate (m-ABR) is a relatively new technology. It aims to allow more efficient delivery of ABR content over networks by enabling the use of multicast for content streams where many clients are requesting the same content at about the same time. One ambition of many m-ABR systems is to deploy multicast and enable m-ABR without any change to the client device and the client application that are already supporting HTTP (unicast) streaming. This can be achieved using a hybrid approach that uses a combination of both multicast and unicast delivery, where a proxy is inserted between the client device and the content server. The proxy can inspect content requests from the client device, and when appropriate, subscribe to a multicast channel, receive multicast content, and provide this content to the client, packaged to look like unicast delivered content.

Examples of such hybrid solutions include: "IP Multicast Adaptive Bit Rate Architecture Technical Report" OC-TR-IP-MULTI-ARCH-C01-161026, 26/10/2016, by Cable Labs; 3GPP specifications, 23.246 (MBMS Architecture and functional description), 26.346 (MBMS Protocols and codecs) and 26.347 (MBMS APIs); and DVB "Adaptive Media Streaming over IP Multicast" ETSI TS 103 769 V1.1.1 (2020-11).

However, the decision as to when to join a multicast channel is not straightforward. Some solutions currently available only provide support for a single ABR/quality level, and prevent the client device from adapting to a different quality level by signalling that the content is only available at that single quality level. However, this gives a poor user experience with interruptions to the presentation of content at the client device when data is not delivered over the network in time. Such interruptions may cause the presentation of content to stall and/or some content not to be presented at all. Corresponding issues arise when deciding when best to leave a multicast channel, with further network inefficiencies resulting from keeping joined to a multicast channel if it is not being used.

**Summary of the Invention**

It is the aim of examples of the present invention to provide an improved method of joining a multicast channel.

According to a first example of the invention, there is provided a method of managing content delivery to a client device by a network element, said content comprising a sequence of segments and wherein each of the segments is encoded at a plurality of quality levels, said method comprising:

  i) determining that there is multicast channel available to join, starting a first timeout timer and a second timeout timer;
  ii) receiving unicast requests for segments encoded at one or more of the quality levels from a client device, forwarding the requests to a unicast content source, receiving the requested segments, and transmitting the requested segments to the client device by unicast;
  iii) restarting the first timeout timer when a request for a segment is received from the client device that matches a segment that is available on the multicast channel;
  iv) restarting the first timeout timer and the second timeout timer if the first timeout timer has expired; and
  v) repeating steps ii) to iv) until the second timeout timer expires, and when the second timeout timer expires joining the multicast channel, receiving segments over multicast, and transmitting segments requested by the client device to the client device by unicast.

The method may further comprise determining the bandwidth between the unicast content source and the network element, wherein the second timeout timer is set in dependence on the determined bandwidth. The second timeout timer may be set to a shorter duration when the determined bandwidth is higher and may be set to a longer duration when the determined bandwidth is lower.

The bandwidth between the unicast content source and the network element may be determined using the bit rate at which the one or more segments is received by the network element from the unicast content source.

The method may further comprise first joining the multicast channel and subsequently leaving the multicast channel. And the second timeout timer may be set in dependence on the time since leaving the multicast channel. The second timeout timer may be set to a longer duration if the time since leaving the multicast channel is shorter and is set to a shorter duration when the time since leaving the multicast channel is longer.

The second timeout timer may be set in dependence on how long the network element was joined to the multicast channel.

The second timeout timer may be set to a longer duration if the network element was joined for a shorter period of time, and a shorter duration if the network element was joined for a longer period of time.

The method may further comprise determining the times between consecutive requests for segments from the client and setting the first timeout timer in dependence on one or more of these determined times.

According to a second aspect of the present invention, there is provided a network element for managing content delivery to a client device, said content comprising a sequence of segments and wherein each of the segments is encoded at a plurality of quality levels, said network element adapted to:

> determine that there is multicast channel available to join, and start a first timeout timer and a second timeout timer;
> receive unicast requests for segments encoded at one or more of the quality levels from a client device, forward the requests to a unicast content source, receive the requested segments, and transmit the requested segments to the client device by unicast;
> restart the first timeout timer when a request for a segment is received from the client device that matches a segment that is available on the multicast channel;
> restart the first timeout timer and the second timeout timer if the first timeout timer has expired; and
> repeat steps ii) to iv) until the second timeout timer expires, and when the second timeout timer expires joining the multicast channel, receive segments over multicast, and transmit segments requested by the client device to the client device by unicast.

## Brief Description of the Drawings

For a better understanding of the present invention reference will now be made by way of example only to the accompanying drawings, in which:

> Figure 1 system diagram showing the main components of an example of the present invention; and
> Figure 2 is a flow chart summarising the steps of an example of the invention;
> Figure 2a is a flow chart summarising the steps of leaving a multicast channel in an example of the invention;
> Figure 3 is a flow chart summarising further steps of an example of the invention;
> Figure 3a is a flow chart summarising the steps of a background process in an example of the invention;
> Figure 3b is a flow chart summarising the steps of joining a multicast channel in an example of the invention;
> Figure 4 is graph showing how the initial value of the first timeout timer can vary with elapsed time for different values of the bandwidth estimate; and
> Figure 5 is a graph showing how the initial value of the third timeout timer can vary with elapsed time for various values of the bandwidth estimate.

## Description of Preferred Embodiments

The present invention is described herein with reference to particular examples. The invention is not, however, limited to such examples.

Described is a method of managing content delivery to a client device by a proxy, where the content is made up of a sequence of content segments and each segment is encoded at a plurality of bit rates or quality levels. The proxy starts off by receiving content requests from the client device over unicast, forwarding them to a content server, and in response, receiving the content over unicast from the content server before forwarding it onto the client device. At some stage, the proxy joins a multicast channel and receives segments over multicast, and a timer is started. That timer is restarted every time one of the requests from the client device matches that of a segment received over multicast. The proxy leaves the multicast channel once the timer expires, and returns to satisfying segment requests from the client device using unicast. The timer can be adjusted according to the determined bandwidth between the unicast content source and the proxy.

Thus, unnecessary use of network bandwidth is avoided by leaving the multicast channel when content segments are delivered by multicast, but not delivered to or used by the client device. However, by adjusting the timer according to the determined bandwidth, the proxy can remain joined to the multicast channel longer, even if not being used, when there is more bandwidth available.

A further method is described relating to a proxy re-joining a multicast channel having already left it, or joining a multicast channel for the first time, in order to deliver content segments to a client device. The method employs two timers - a first and second timer, where the second timer is longer than the first. Both timers start counting down once a proxy determines that there is a multicast channel available to join, and starts receiving content requests from the client device over unicast. Those requests are fulfilled by the proxy forwarding the requests to a content server, receiving content in response over unicast and forwarding it to the client device. If the requested content is also found to be available on the multicast channel, then the first timer is restarted. If the first timer reaches zero, first and second timers are restarted. However, if the second timer reaches zero, then the proxy joins the multicast channel and fulfils content requests from the client using content received over multicast.

Thus, the multicast channel is only joined after a period of the client consistently requesting content that matches that available on the multicast. Further, by adjusting the second timer according to the available bandwidth between the content source and the proxy, the joining decision can be made in dependence on how much available bandwidth there is.

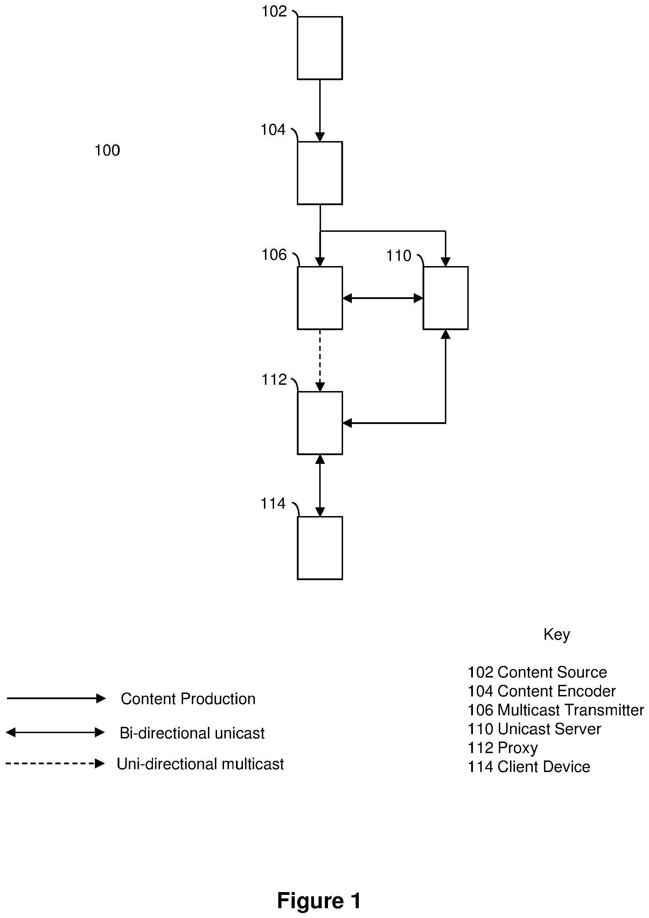

Figure 1 shows an adaptive bit rate (ABR) streaming system 100 comprising the main components of an example of the invention. The system 100 comprises a content source 102, a content encoder 104, a multicast transmitter 106, a unicast content server 110, a proxy 112 and a client device 114. The content source 102 provides content, such as a live sports or TV broadcast, in the form of video sequences to the content encoder 104.

The proxy 112 comprises a cache for storing data. The proxy 112 may be located within a device such as a home gateway or router.

The client device 114 is assumed to be running a client application, which is the source of content requests. For simplicity, the term client device has been used to refer to a client device running a client application.

The content encoder 104 receives the content from the content source 102 and encodes it using a suitable compression scheme, such as ITU-T Recommendation H.264 for video content, and segments the encoded content into a sequence of content segments, each content segment typically of duration 2 to 10 seconds. The content encoder 104 also encodes the content at one or more quality levels or bit rates, resulting in one or more (at each quality level) encoded content segments corresponding to each uncompressed content segment. Such an arrangement is typical of an adaptive bit rate streaming service.

The content encoder 104 passes the encoded content segment data, encoded at all of the required bit rates, to the unicast server 110 where the data is stored and made available for delivery by unicast. The unicast server 110 responds to unicast requests for content segments with unicast responses using the stored data.

The content segments encoded at one quality level, corresponding to one encoded bit rate, are passed to the multicast transmitter 106 for transmission by multicast to any devices that have subscribed to the respective multicast channel. However, the invention is not limited to this case, and also applies when content segments encoded at a plurality of quality settings, corresponding to a plurality of encoded bit rates, are passed to the multicast transmitter 106 for transmission by multicast on a plurality of multicast channels (one channel per quality setting).

The multicast transmitter 106 may start to transmit content segments before, at the same time, or after they have been made available on the unicast server 110. The multicast transmitter 106 may transmit content segments at a constant bit rate, approximately equal to their encoding rate, to fully utilise the multicast channel, or may transmit them at a faster rate.

The multicast transmitter 106 may be configured in one of various modes of operation.

In one mode of operation, the unicast server 110 monitors the requests for content segments made by a plurality of client devices. When the unicast server 110 determines that a sufficient number of client devices have requested the same content segment at about the same time, it instructs the multicast transmitter 106 to transmit the content segment on the multicast channel, in the expectation that it would subsequently be requested by additional client devices. The multicast transmitter 106 obtains the content segment from the unicast server 110 and converts the content segment data into a format suitable for multicast delivery, and then transmits the resulting content segments on the multicast channel to all devices that have subscribed to that multicast channel

In another mode of operation, the multicast transmitter 106 is configured for specific content, such as a television channel, at a specific encoding quality level. Content segments encoded at the specific quality setting, corresponding to one encoded bit rate, are passed from the content encoder 104 to the multicast transmitter 106 for transmission by multicast to all the devices that have subscribed to the respective multicast source. However, examples of the invention are applicable to other modes of the multicast transmitter 106.

Whilst the system 100 described here comprises a single client device 114, it should be noted that more than one client device may be connected to the proxy 112. Similarly, the system may comprise more than one proxy 112, each with one or more client devices 114 connected to it.

To request content segments, the client device 114 can first obtain a manifest file from the unicast server 110. Manifest files are used by client devices to identify where content segments are located (by a URL in the manifest). The client device 114 can then request these content segments in sequence using HTTP requests from the unicast server 110, and concatenate them to form a continuous stream of content segments for playback. As each content segment is available on the unicast server 110 at a plurality of encoded bit rates, the client device 110 determines for each content segment, the encoded bit rate (quality) at which to request it, taking into account such factors as the available network throughput and how much data is already received and buffered at the client device awaiting play-out.

Some HTTP requests made by the client device 114 for content segments will not make use of multicast delivery and are sent directly to the unicast server 110, which delivers the requested content segments by unicast. Other requests for content segments from the client device 114 that may benefit from multicast delivery are re-directed to, or simply intercepted by, the proxy 112, and can be handled in accordance with the examples described below.

The proxy 112 can be inserted in the HTTP path using any of a number of well-known techniques, such as using an HTTP redirection from the unicast server 110. In this case, the unicast server 110 would be configured such that requests for potentially popular content are not served directly but instead redirected to a suitable proxy. For example, instead of supplying a normal response, the unicast server 110 could respond with an HTTP status code 307 which indicates a temporary redirect. This invites the client device 114 to make a new request to the new URL supplied by the unicast server 110 in its response, thus enabling requests to be made to the proxy 112. This technique allows the unicast server 110 and the proxy 112 to exist in different domains, which would often be the case.

Other mechanisms to insert the proxy 112 in the HTTP path include: proxy configured as a transparent proxy (though all requests are intercepted by it, and only works with unencrypted traffic); proxy configured as a forward proxy (where the client device sends its requests directly to the proxy by virtue of being explicitly configured to do so); DNS hijacking (where a DNS server is configured to supply the IP address of the proxy for domains of interest); and manifest manipulation (where the manifest file is re-written so that requests are made directly to the proxy).

The client device 114 could request and receive content segments from the unicast server 110 from the start to the end of a streaming session. However, in some cases the proxy 112 determines that multicast delivery could be used to receive some content segments.

The proxy 112 monitors unicast content requests from the client device 114 and is aware of when content segments requested by the client device 114 could be received by multicast.

The proxy 112 determines whether it should join a multicast channel to satisfy the client device's requests for content segments using data that is delivered by multicast, and if so, joins the relevant multicast channel at an appropriate time, and, after receiving data by multicast, replies to the client device's requests with content segments received by multicast, but packaged as unicast content responses.

If the proxy 112 has joined a multicast channel, the proxy 112 determines whether it should remain joined to the multicast channel or whether it should leave. In the case of deciding to leave, the proxy 112 leaves the multicast channel, and returns to satisfying the client device's requests for unicast content segments by requesting the content segments from the unicast server 110 and delivering it to the client device 114 as unicast responses.

After leaving a multicast channel, the proxy 112 may determine whether it should again join the multicast channel to satisfy the client device's requests for content segments using data that is delivered by multicast. If so, the proxy 112 joins the relevant multicast channel at an appropriate time, and, after receiving data by multicast, replies to the client device's requests for content with content segments received by multicast, but packaged as unicast responses.

The client device 114 does not need to be aware of the proxy 112 and does not need to be aware of whether content segments are being delivered by unicast from the unicast server 110 via the proxy 112, or are delivered by multicast to the proxy 112 which then delivers the content segments to the client device 114 in a unicast format.

The proxy 112 receives requests for content segments from the client device 114, forwards these to the unicast server 110, receives the corresponding responses and forwards these to the client device 114.

The proxy 112 determines the rate at which a content segment is received from the unicast server 110 and stores the determined value in the parameter *delivery_rate*. The proxy 112 could, for example, determine the value of *delivery_rate* as the size of the content segment divided by the time taken to receive the content segment.

The proxy 112 maintains a parameter termed *bandwidth_estimate* which is indicative of the bandwidth available between the content server 110 and the proxy 112 for the delivery of content segments by unicast delivery. This value will be dependent on whether the proxy 112 is joined to the multicast channel or not, as in the case of being joined to the multicast channel, the bandwidth used by the multicast channel is not available for the delivery of content segments by unicast delivery.

The proxy 112 may know the data rate of the multicast channel, but if not, the proxy 112 could estimate a value from the size of segments at the quality level that is available on the multicast channel divided by the segment interval, which is the typical time between consecutive requests for segments.

The proxy 112 determines a value for *bandwidth estimate* from time to time, and in particular after a segment has been received by unicast from the unicast server 110, and an additional value of *delivery_rate* has been calculated.

The proxy 112 determines a value for *bandwidth estimate* in any of many different ways, using one or more previously determined values of *delivery_rate.* For example, the proxy 112 could determine the value of *bandwidth estimate* as the average of the most recent N values of *delivery_rate,* or as the maximum, minimum or median of these values, or in any other way. The average could be calculated for example as the arithmetic, geometric or harmonic mean of the values of *delivery_rate.* N could be any integer greater than or equal to one. Alternatively, instead of using a fixed value of N, the proxy 112 could use all values of *delivery_rate* determined in the preceding period of time T, where T could, for example, be 60 seconds or any other period of time.

When the proxy 112 determines a value for *bandwidth estimate,* it takes into account, for each of previously determined values of *delivery_rate* that are to be used, whether it was joined to the multicast channel at the time of determining the value of *delivery_rate.*

If the proxy 112 is joined to the multicast channel, it subtracts the data rate of the multicast channel from each value of *delivery_rate* that was calculated when not joined to the multicast channel, before determining a value for *bandwidth estimate.*

Conversely, if the proxy 112 is not joined to the multicast channel, it adds the data rate of the multicast channel to each value of *delivery_rate* that was calculated when not joined to the multicast channel, before determining a value for *bandwidth_estimate.*

If the proxy 112 determines to join a multicast channel, the proxy 112 initiates the process of joining the multicast channel. This may be done for example by issuing an IGMP Join request.

Leaving a multicast channel

Described now is a first example of how the proxy 112, having already joined a multicast channel, can determine whether to leave that multicast channel. There is then described an example of the proxy 112 can determine whether to join a multicast channel, for example after the proxy 112 has first decided to leave the multicast channel.

Starting with the first example of determining whether to leave a multicast channel.

When joined to the multicast channel, the proxy 112 will be able to satisfy requests for content segments from the client device 114 from data that has been received on the multicast channel and stored in its cache, provided that these content segments are requested at the quality level that was received on the multicast channel. Any content segments requested by the client device 114 that are not stored in the cache, including those requested at a different quality level, will have to be satisfied by requesting them from the unicast server 110. In this case, the proxy 112 will receive the requested segment by unicast, while also receiving content segment data on the multicast channel but at a different quality level.

If there is plenty of bandwidth between the unicast server 110 and the proxy 112, then occasionally having to obtain a content segment by unicast while being joined to the multicast channel may not be a serious problem. However, in some cases there may be insufficient bandwidth between the unicast server 110 and the proxy 112 to simultaneously receive a content segment by unicast and another by multicast, or in other cases, only just enough bandwidth to do so. In each of these cases, the time taken to satisfy the request for the content segment from the client device 114 may be sufficiently long that the client device 114 stalls media play-out or requests subsequent content segments at an even lower quality. This behaviour is highly undesirable and should be avoided.

While it is desirable for the proxy 112 to remain joined to the multicast channel if the client device 114 is expected to request content segments that have been delivered on the multicast channel and stored in the cache, the importance of getting the decision to stay joined to the multicast channel correct is greater when there is less bandwidth between the unicast server 110 and the proxy 112, as the consequences of getting the decision wrong has more impact on the quality of experience presented on the client device 114.

The proxy 112 sets the value of a parameter *join_time* equal to the time at which the proxy 112 joins the multicast channel.

The proxy 112 starts counting down a timer *first_timeout_*timer. The proxy 112 determines an initial value of the *first_timeout_timer* using either the determined value of *bandwidth estimate,* the time that has elapsed since the proxy 112 joined the multicast channel, or both.

If *first_timeout_timer* expires, that is, it counts all the way down to zero, the proxy 112 determines to leave the multicast channel, and initiates the process of leaving the multicast channel. This may be done for example by issuing an IGMP Leave request.

The higher the value of *bandwidth estimate,* the more optimistic the proxy 112 can be about remaining joined to the multicast channel. The proxy 112 therefore sets the initial value of *first_timeout_timer* to a lower value (shorter timeout duration) when the value of *bandwidth estimate* is lower and sets the initial value of *first_timeout_timer* to a higher value (longer timeout duration) when the value of *bandwidth_estimate* is higher.

The importance of leaving the multicast channel also depends on the amount of time that has elapsed since the proxy 112 joined the multicast channel, which the proxy 112 can determine having stored the time of joining the multicast channel in the parameter *join_time.* In some cases, the act of joining the multicast channel may affect the quality level decisions made by the client device 114, for example, because the time taken to respond to requests for content segments from the client device 114 may have changed due to the relative timing of data on the multicast channel and the timing of the requests for content segments.

The more time that has elapsed since the proxy 112 joined the multicast channel, the less likely it is that the act of joining has caused the client device 114 to request content segments at a different quality level to those delivered on the multicast channel. The proxy 112 therefore sets the initial value of *first_timeout_timer* to a lower value (shorter timeout duration) when the elapsed time is lower and sets the initial value of *first_timeout_timer* to a higher value (longer timeout duration) when the elapsed time is higher.

The proxy 112 receives content segments on the multicast channel and stores it in its cache. Initially the cache will be empty, and will fill with data as content segments are received on the multicast channel and stored. Eventually the cache will become full, after which time, content segments that are received on the multicast channel will be stored by overwriting previously stored content segments. Typically, the oldest segment stored in the cache will be overwritten by the content segment being received on the multicast channel.

The proxy 112 is aware of whether it is in the start-up phase of filling the cache with content segments received on the multicast channel, or whether it is in the steady-state (or normal) phase of overwriting content segments in the cache with newly received content segments on the multicast channel. It may be aware of this by, for example, monitoring the fill of the cache, or by maintaining a record of the first data that has been stored in the cache and determining whether that data is still stored in the cache (or whether it has been overwritten).

The phase of the filling of the cache, being either the start-up phase or the steady state phase, affects how the proxy 112 should respond to receiving a request from the client device 114 for a content segment that could have been delivered on the multicast channel but is not currently stored in the cache at the proxy 112. The client device 114 may make a request for a content segment at a different time to the time at which that content segment is transmitted on the multicast channel. If the client device 114 makes a request for a content segment later than the time at which that content segment was transmitted on the multicast channel, and the proxy 112 has only recently joined the multicast channel, then the requested segment may have been transmitted on the multicast channel before the proxy 112 joined the multicast channel, and hence the content segment would not be stored in the cache. However, if the client device 114 makes requests for subsequent content segments with the same relative timing to their transmission on the multicast channel, then as the cache fills, it may later be possible to satisfy these requests with content segments that have been received on the multicast channel and stored in the cache.

For example, if the proxy 112 has only recently joined the multicast channel, and the client device 114 requests a content segment one minute after it was transmitted on the multicast channel, then that content segment would not be stored in the cache. But if the cache has the capability to store three minutes of content segments, and the client device 114 makes requests for subsequent content segments with the same relative timing to their transmission on the multicast channel, then after one minute, content segments requested by the client device 114 will be stored in the cache. But, on the other hand, if the cache has the capability to store only thirty seconds of content segments, then after thirty seconds, data in the cache will start to get overwritten, and if this is done with new content segments replacing the oldest content segments, then no content segment requested by the client device 114 will be found in the cache, even one minute or more after the proxy 112 joined the multicast channel.

Hence while in the start-up phase with the cache filling, there is a possibility in later requests from the client device 114 may be for content segments that are stored on the cache, and hence the proxy 112 should not act towards leaving the multicast channel just because the requested content segment is not in the cache. But when in the steady-state phase and the cache has filled and data has started to be overwritten, the proxy should take action towards leaving the multicast channel.

The proxy 112 intercepts a request for a content segment from the client device 114.

The proxy 112 determines whether the content segment requested by the client device 114 could have been delivered on the multicast channel. The proxy 112 may, for example, determine this by using a matching pattern that relates to the content stream and the quality level transmitted on the multicast channel. An example matching pattern is "t2-btsport-live-hls-prod.akamaized.net/out/u/bts1/bts1_7", which indicates the BT Sport Channel 1, quality level 7. The proxy 112 could compare the URL that the client device 114 has used to request the content segment with the matching pattern. The URL does not necessarily have to match in its entirety, but just have the matching pattern within it. For example, the client device 114 may request a URL such as https://t2-btsport-live-hls-prod.akamaized.net/out/u/bts1/bts1 _7_15055280.ts?m=1543850508 for a video content segment, and the proxy 112 determines that this includes the matching pattern, and hence that the request is for a segment that could have been delivered on the multicast channel.

If the multicast channel is used to deliver more than one quality level, then the proxy 112 would use a different matching pattern for each quality level delivered on the multicast channel, and the proxy 112 would conclude that the content segment requested by the client device 114 could have been delivered on the multicast channel if any of the matching patterns is present in the URL of the request.

If the proxy 112 determined that the content segment requested by the client device 114 could have been delivered on the multicast channel, the proxy 112 determines whether the requested segment is stored in its cache. The proxy 112 may, for example, determine this by comparing the URL that the client device 114 has used to request the content segment with data associated with each segment stored in the cache, where this data could be the full URL or a part of it that allows one content segment to be distinguished from another, for example, "15055280" in the example URL above.

If the proxy 112 determined that the content segment requested by the client device 114 is stored in its cache, the proxy 112 restarts *first_timeout_timer,* and replies to the request from the client device 114 using data stored in its cache with the data formatted as a unicast response.

The proxy 112 determines an initial value of the first timeout timer using either the determined value of *bandwidth_estimate,* the time that has elapsed since the proxy 112 joined the multicast channel, or both.

The proxy 112, having matched a request for a content segment from the client device with a content segment stored in its cache, may determine that the start-up phase has completed, and that it is now operating in the steady-state phase.

Otherwise, if the content segment requested by the client device 114 is not stored at the proxy 112, the proxy 112 forwards the request to the unicast server 110, receives a response and forwards the response to the client device 114. The proxy 112 determines the rate at which the content segment is received from the unicast server 110 and stores the determined value in the parameter *delivery_rate,* and the proxy 112 then determines a value for *bandwidth_estimate* using one or more previously determined values of *delivery_rate.*

If the proxy 112 determined that the content segment requested by the client device 114 could have been delivered on the multicast channel but also determined that it is not stored in its cache, the proxy takes the following action.

If the proxy is still operating in the start-up phase, that is, if it is still filling its cache with data delivered by multicast without having to overwrite previously received and stored data, and has not been able to satisfy any request from the client device 114 with data stored in its cache, the proxy 112 concludes that the client device 114 may have made a request for a content segment that was delivered on the multicast channel before the proxy 112 joined the multicast channel. The proxy 112 restarts the first timeout timer, as it is possible that the client device 114 is making requests for content segments behind the live edge, but within the capability of the cache, so that in due course, as the cache fills further, it may be possible to satisfy subsequent requests for content segments from the client device 114 with data stored in its cache.

If the proxy is no longer operating in the start-up phase, that is, if it is in the steady-state phase, the proxy 112 does not restart the first timeout timer, and just allows it to count down. When the client device 114 makes a request for a content segment that could have been delivered on the multicast channel, but is not stored in the cache at the proxy, and that cache has been filled, and new content segments are overwriting older content segments in the cache, the requests from the client device 114 are too far from the live edge to be serviceable from the cache, and the proxy 112 should leave the multicast channel soon. The proxy 112 could in this case determine to leave the multicast channel immediately, or it could wait until the first timeout timer expires. It is possible that the user of the client device 114 has moved on the timeline of the content, for example by jumping back to a past time, but may soon move back to the live edge after viewing the content of interest in the past, in which case it may be better for the proxy 112 to wait a while (at least for the first timeout timer to expire) before leaving the multicast channel rather than leaving immediately.

If the proxy 112 determined that the content segment requested by the client device 114 could not have been delivered on the multicast channel, the proxy may simply follow the process described above of forwarding the request to the unicast server 110, and forwarding the response to the client device 114, and updating the determined value for *bandwidth estimate* in dependence on the rate at which the response was received from the unicast server 110.

As stated above, when the proxy 112 restarts *first_timeout_timer,* it determines an initial value of *first_timeout_timer* using either the determined value of *bandwidth_estimate,* the time that has elapsed since the proxy 112 joined the multicast channel, or both. In particular, it is the ratio of the *bandwidth estimate* to the multicast channel rate that is important, as this indicates the significance of delivering content segments by both multicast and unicast at the same time to the proxy 112.

The following is one example of a method that the proxy 112 could use to set the initial value of *first_timeout_timer.* Other methods could be used.

The proxy 112 may be aware of the data rate of the multicast channel. But if this is not known, the proxy 112 could estimate a value from the size of segments at the quality level that is available on the multicast channel divided by the segment interval, which is the typical time between consecutive requests for segments.

If *bandwidth_estimate* is low, for example less than the data rate of the multicast channel so that it is not possible for the proxy to receive both the multicast channel and, in a timely fashion, content segments at the same quality level as delivered on the multicast channel, the proxy 112 may set the initial value of *first_timeout_timer* to a short duration, such as 1.5 times the segment interval. This implies that *first_timeout_timer* will expire if the next regular request from the client device 114 for a content segment does not cause the proxy 112 to restart *first_timeout_timer.*

If *bandwidth_estimate* is more than 5 times the data rate of the multicast channel, the proxy 112 may set the initial value of *first_timeout_timer* to a longer value, such as 10 times the segment interval. This allows the proxy 112 to remain joined to the multicast channel for a longer period without a request from the client device 114 for a content segment causes the proxy 112 to restart *first_timeout_timer.*

If *bandwidth_estimate* is between these two extremes of the data rate of the multicast channel, the proxy 112 may set the initial value of *first_timeout_timer* linearly between these extremes.

In this example, the proxy 112 would calculate the initial value of *first_timeout_timer, FTT,* as shown in Equation (1) below, where r is the ratio of *bandwidth estimate* to the data rate of multicast channel. It should be remembered that here *bandwidth_estimate* is the bandwidth available for unicast delivery of content segments, having already taken the data rate of the multicast channel into consideration.

$$FTT = \begin{cases} 1.5 & if\ r < 1.0 \\ 1.5 + 8.5\frac{(r-1.0)}{4.0} & if\ 1.0 \le r \le 5.0 \\ 10.0 & if\ r > 5.0 \end{cases} \qquad (1)$$

If the time that has elapsed since the proxy 112 joined the multicast channel is less than a threshold, for example, less than 30s, the proxy 112 may set the initial value of *first_timeout_timer* to a shorter duration, whereas if the elapsed time is higher, the proxy 112 may set the initial value of *first_timeout_timer to* a longer duration or may, for example, set it dependent just on *bandwidth_estimate.* This is shown below where the quantity of *FTT* above the minimum value of 1.5 is scaled by the factor *S,* where *S* is calculated as the elapsed time, *ET,* divided by 30s if *ET* is less than 30s, and set to 1.0 otherwise, as shown in the pair of equations (2) and (3) below.

$$S = \begin{cases} 0.0 & if\ ET < 0 \\ \frac{ET}{30} & if\ 0 \le ET \le 30 \\ 1.0 & if\ ET > 30 \end{cases} \qquad (2)$$

$$FTT = \begin{cases} 1.5 & if\ r < 1.0 \\ 1.5 + 8.5\ S\ \frac{(r-1.0)}{4.0} & if\ 1.0 \le r \le 5.0 \\ 1.5 + 8.5\ S & if\ r > 5.0 \end{cases} \qquad (3)$$

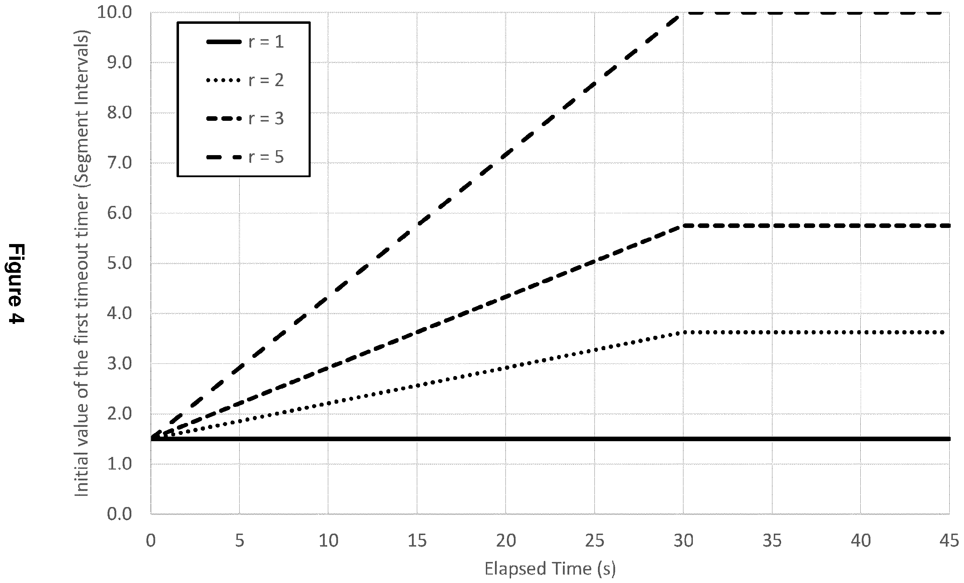

Examples of how the initial value of the first_timeout_timer varies according to elapsed time for four values of *bandwidth_estimate,* r, is shown in Figure 4.

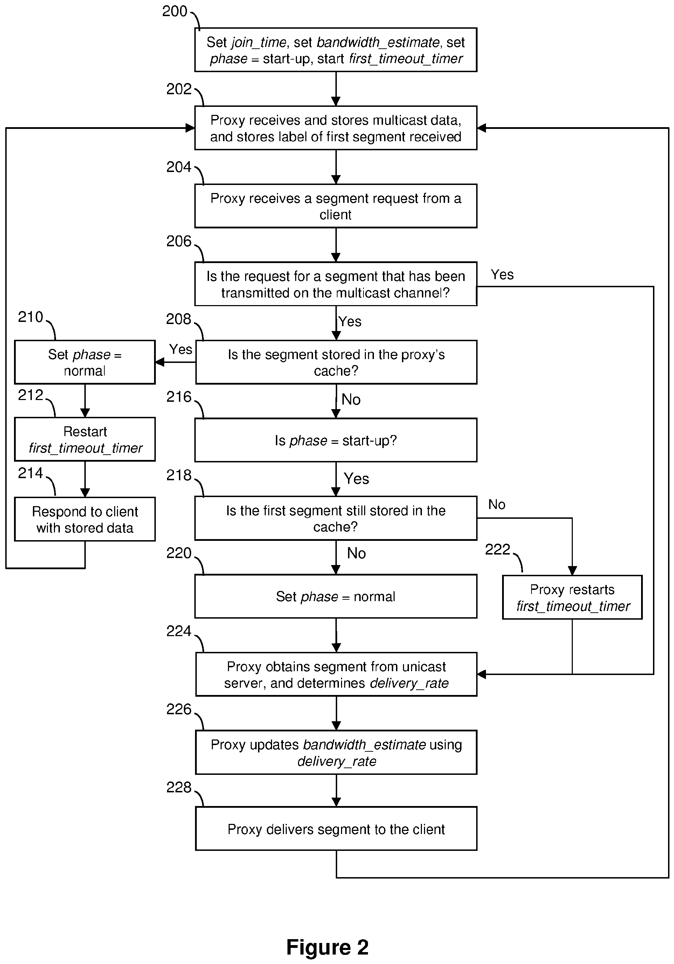

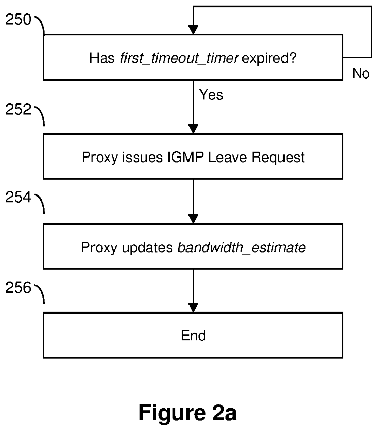

Turning now to Figure 2. Figure 2 shows a flow chart summarising the steps of the operation of the proxy 112 in an example of the method in which the proxy 112 has already joined a multicast channel, and determines whether to leave the multicast channel. This largely mirrors the method already described above.

Starting at step 200, when the proxy 112 has joined the multicast channel, the proxy 112 then sets the parameter *join_time* to the current time. *join_time* stores the time at which the proxy 112 joined the multicast channel. The proxy 112 determines the parameter *bandwidth estimate* to take into account that the proxy 112 has joined the multicast channel, and less bandwidth is therefore available for unicast delivery of content segments.

The proxy 112 sets the phase of operation parameter, *phase,* to start-up. This indicates that no data for a segment requested by the client device 114 has been found in the cache yet and that the cache has not yet been completely filled.

The proxy 112 sets an initial value of *first_timeout_timer* and starts the timer counting down. *first_timeout_timer* will count down towards zero (when it expires) or is restarted.

In step 202, the proxy 112 receives content segment data on the multicast channel and stores that content segment data. The proxy 112 may maintain a record or label of the first content segment that has been stored in the cache, so that later it can determine whether the cache has been filled and content segment data is being overwritten by whether content segment data associated with the label is still present in the cache.

The proxy 112 receives a request for a content segment from client device 114 in step 204. The request is in the form of an HTTP GET request and is for a content segment stored at the unicast server 110. The request is unicast in nature and directed to content segments encoded at a particular bit rate. Each HTTP GET request includes the URL of where that content segment can be retrieved from. The URLs are found in the manifest file associated with the content.

In step 206, the proxy 112 determines whether the content segment requested by the client device 114 is available on the multicast channel, and if so, flow passes to step 208. Otherwise flow passes to step 224.

The proxy 112 may, for example, determine this by comparing the URL that the client device 114 has used to request the content segment with a matching pattern that relates to the content stream and the quality level transmitted on the multicast channel as described earlier.

In step 208, the proxy 112 determines whether the content segment requested by the client device 114 has been received on the multicast channel and stored at the proxy 112 in the cache, and if so, flow passes to step 210. Otherwise flow passes to step 224.

In step 210, the proxy 112 sets the phase of operation parameter, *phase,* to normal. The normal phase of operation takes place after a segment requested by the client device 114 has been found in the cache, or after the cache has been filled and new segment data received on the multicast channel has overwritten segment data received earlier on the multicast channel and stored in the cache.

In step 212, the proxy 112 sets *first_timeout_timer* to an initial value and restarts the timer. The proxy 112 may use the same initial value of *first_timeout_timer* as used previously in this step, step 200 or step 222, or may calculate a new value, using for example the value of *bandwidth_estimate* and the time that has elapsed since joining the multicast channel as described earlier.

In step 214, the proxy 112 responds to the client device 114 with a unicast response using segment data that had been received on the multicast channel and stored in the cache at the proxy 112. Once the client device 114 receives this content segment, it can be played-out. Flow then passes back to step 202 to repeat the processing for next received multicast segment data and a client request for content segment.

Turning back to step 208, if the proxy 112 determines that the content segment requested by the client device 114 has been received on the multicast channel and but not stored in the cache at the proxy 112, flow passes to step 216.

In step 216, the proxy 112 checks the phase of operation, *phase,* and if this is the start-up phase, flow passes to step 218. Otherwise, flow passes to step 224.

In step 218, the proxy 112 determines whether the cache has been filled and new content segments received on the multicast channel have overwritten content segments received earlier on the multicast channel and stored in the cache. It may determine this by, for example, monitoring the fill of the cache, or by maintaining a record or label of the first segment data that has been stored in the cache and determining whether that segment data is still stored in the cache. If the cache still contains the first segment data received on the multicast channel, and no segment data received on the multicast channel and stored in the cache has been overwritten, flow passes to step 222. Otherwise, flow passes to step 220.

In step 220, the proxy 112 sets the phase of operation, *phase,* to normal and flow passes to step 224.

In step 222, the proxy 112 sets *first_timeout_timer* to an initial value and restarts (starts counting down) the timer. The proxy 112 may use the same initial value of *first_timeout_timer* as used previously in this step, step 200 or step 212, or may calculate a new value, using for example the value of *bandwidth_estimate* and the time that has elapsed since joining the multicast channel.

In step 224, the proxy 112 obtains the requested content segment by unicast from the unicast server 110. The proxy 112 determines the rate at which the content segment is received from the unicast server 110 and stores the determined value in the parameter *delivery_rate.*

In step 226, the proxy 112 updates its estimate of the bandwidth, stored in parameter *bandwidth estimate,* of the connection between it and the unicast server 110. As already described, the proxy 112 could determine the value of *bandwidth_estimate* in any of many different ways using one or more previously determined values of *delivery_rate* taking into account that the proxy 112 has joined the multicast channel, and less bandwidth is therefore available for unicast content segment requests.

In step 228, the proxy 112 forwards the content segment data received from the unicast server 110 to the client device 114 as a unicast response to the request from the client device 114. Once the client device 114 receives this content segment, it can be played out. Flow then passes back to step 202 to repeat the processing for next received multicast segment data and a client request for content segment.

A background process of checking the expiry of *first_timeout_timer* runs continuously in the proxy 112 after step 200, and is shown in Figure 2a. In step 250, *first_timeout_timer* is continuously checked to determine if it has expired, that is, if it has counted down from the initial value to zero. If *first_timeout_timer* has expired, then processing passes to step 252, otherwise processing loops back to step 250.

In step 252, the proxy 112 initiates the process of leaving the multicast channel. This may be done for example by issuing an IGMP Leave request. The proxy 112 then updates the parameter *bandwidth_estimate* in step 254 to take into account that the proxy 112 has left the multicast channel, and more bandwidth is therefore available for unicast content segment requests. The proxy 112 increases the value of *bandwidth estimate* by the data rate of the multicast channel that it has just left.

The background process ends in step 256.

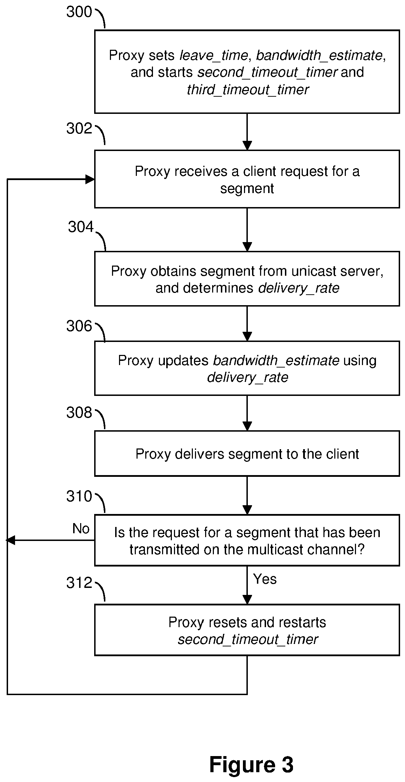

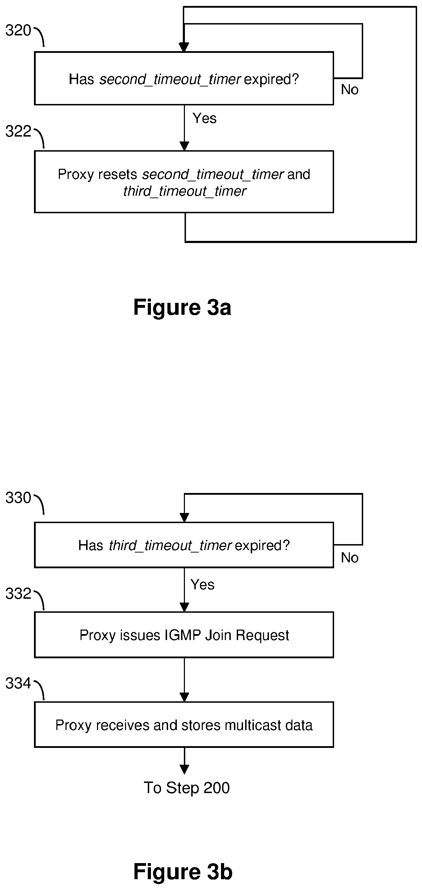

However, in an example of a further method, instead of ending in step 256, processing may pass to step 300 of Figure 3, which is the start of a method of determining whether to join the multicast channel again.

There now follows a description of a method of how a proxy 112 may join a multicast channel, either for the first time or again having left the multicast channel (for example, following the end of the steps described in Figure 2a above).

Joining a multicast channel

Described now is an example of how the proxy 112 can determine whether to join the multicast channel, either for the first time, or again after having left the multicast channel. The proxy 112 determines whether it should join a multicast channel to satisfy requests for content segments from the client device 114 using content segments that are delivered by multicast. If so, the proxy 112 joins the relevant multicast channel at an appropriate time, and, after receiving content segments by multicast, replies to the client device's requests for content segments with content segments received by multicast, but packaged as unicast responses.

While the intention is for the proxy 112 to only join the multicast channel if the client device 114 is expected to continue to request content segments being delivered on the multicast channel, the importance of getting the decision to join the multicast channel correct is greater when there is less bandwidth between the unicast server 110 and the proxy 112, as the consequences of getting the decision wrong has more impact on the quality of experience presented on the client device 114.

As described earlier, the proxy 112 receives requests for content segments from the client device 114, forwards these to the unicast server 110, receives the corresponding responses and forwards these to the client device 114. The proxy 112 determines the rate at which the content segment is received from the unicast server 110 and stores the determined value in the parameter *delivery_rate.* The proxy 112 determines a value for the parameter *bandwidth_estimate* from one or more previously determined values of *delivery_rate* as described earlier, or the value from step 254 can be used if the proxy 112 had been previously joined to a multicast channel.

If the proxy 112 had previously been joined to a multicast channel as described above, the proxy 112 sets the value of a parameter *leave_time* equal to the time at which the proxy 112 left the multicast channel. Otherwise, if this will be the first time joining, then *leave_time* is not set.

The proxy 112 sets and starts two timers: *second_timeout_timer* and *third_timeout_timer*. The initial value of the *third_timeout_timer* is set larger than the initial value of the *second_timeout_timer.* Therefore, if neither timer is restarted, the *second_timeout_timer* will expire first.

The proxy 112 can determine an initial value of *second_timeout_timer* using the determined value of *bandwidth_estimate.* Alternatively, if the proxy 112 had previously been joined to the multicast channel, it could use value of *first_timeout_timer* from steps 212 or 222 used while joined to the multicast channel.

If *second_timeout_timer* expires, that is, it counts all the way down to zero, the proxy 112 restarts *third_timeout_timer,* and restarts *second_timeout_timer.*

If *third_timeout_timer* expires, that is, it counts all the way down to zero, the proxy 112 determines to join the multicast channel, and initiates the process of joining the multicast channel. This may be done for example by issuing an IGMP Join request.

If *second_timeout_timer* expires, the proxy 112 concludes that there is evidence against joining the multicast channel at this time, and the process of considering whether to join is restarted by restarting *second_timeout_timer.*

The proxy 112 can set an initial value of *third_timeout_timer* that is longer than the initial value of *second_timeout_timer.* The value of *third_timeout_timer* could be set in dependence on whether the multicast channel has previously been joined, and if so, how long it joined the multicast channel and/or how long ago it left the multicast channel. A longer initial value of *third_timeout_timer could* be used if the multicast channel had been joined for only a short period of time. As time since leaving the multicast channel increases, the value could move towards a value determined using the *bandwidth estimate* and not how long it was joined to the multicast channel and how long ago it left.

If the proxy 112 had previously been joined to the multicast channel, the proxy 112 may determine an initial value of the *third_timeout_timer* using the number of requests from the client device 114 that it had been able to satisfy with content segments that had been received on the multicast channel and stored in the cache. The proxy 112 determines a longer initial value of *third_timeout_timer* when there are fewer such requests, or none at all. If the proxy 112 had been unable to satisfy any requests from the client device 114 with content segments that had been received on the multicast channel and stored in the cache, then it should be cautious before joining the multicast channel again. This client behaviour could, for example, be caused by the client device 114 requesting content segments away from the live edge, for example, because of the user viewing a programme using a "start-over" function and watching from the start of the programme rather than at the live edge.

Rather than considering the number of requests satisfied with content segments that had been received on the multicast channel and stored in the cache during the whole time that the proxy 112 was joined to the multicast channel, the proxy 112 may consider just the period leading up to the time it left the multicast channel. This could be 30s, 2 minutes or longer. This would avoid the conclusion being determined using requests for content segments received a long time ago and take only recent behaviour by the client device 114 into account.

The proxy 112 receives requests for content segments from the client device 114, and determines whether the content segment requested by the client device 114 could have been delivered on the multicast channel by, for example, using one or more matching patterns that relate to the content stream and the quality level or levels transmitted on the multicast channel as described earlier.

If the proxy 112 determined that the content segment requested by the client device 114 could have been delivered on the multicast channel, the proxy 112 restarts *second_timeout_timer*. The proxy 112 determines an initial value of *second_timeout_timer* as described above.

The following is one example of a method that the proxy 112 could use to set the initial value of *second_timeout_timer* and the initial value of *third_timeout_timer*. Other methods could be used.

The proxy 112 could set the initial value of *second_timeout_timer* to a value between one and two segment durations, such as 1.5 segment durations. In this case, if the client device 114 makes regular requests for content segments, then any such request for a content segment that is not transmitted on the multicast channel will cause *second_timeout_timer* to expire 0.5 segment durations later, which will cause *third_timeout_timer* to be restarted, and the process of determining whether to join the multicast channel will effectively be restarted.

The proxy 112 could set the initial value of the *third_timeout_timer, TTT,* as shown in Equation (4) below, where r is the ratio of *bandwidth estimate* to the data rate of multicast channel. It should be remembered that here *bandwidth_estimate* is the bandwidth available for unicast delivery of content segments, with no consideration of the data rate of the multicast channel, that is, it is calculated from the rate of delivery of content segments by unicast when the proxy has not joined the multicast channel.

$$TTT = \begin{cases} 10.0 & if \; r < 2.0 \\ 10.0 - 7.0 \, \frac{(r-2.0)}{4.0} & if \; 2.0 \le r \le 6.0 \\ 3.0 & if \; r > 6.0 \end{cases} \qquad (4)$$

If the time that has elapsed since the proxy 112 joined the multicast channel is less than a threshold, for example, less than 30s, the proxy 112 may set the initial value of the *third_timeout_timer* to a longer duration, whereas if the elapsed time is higher, the proxy 112 may set the initial value of *third_timeout_timer* to a shorter duration or may, for example, set it dependent just on *bandwidth_estimate*. This is shown below where the quantity of *TTT* below the maximum value of 10.0 is scaled by the factor *S,* where *S* is calculated as the elapsed time, *ET,* divided by 30s if *ET* is less than 30s, and set to 1.0 otherwise, as shown in the pair of equations (5) and (6) below.

$$S = \begin{cases} 0.0 & if \; ET < 0 \\ \frac{ET}{30} & if \; 0 \le ET \le 30 \\ 1.0 & if \; ET > 30 \end{cases} \qquad (5)$$

$$TTT = \begin{cases} 10.0 & if \; r < 2.0 \\ 10.0 - 7.0 \, S \, \frac{(r-2.0)}{4.0} & if \; 2.0 \le r \le 6.0 \\ 10.0 - 7.0 \, S & if \; r > 6.0 \end{cases} \qquad (6)$$

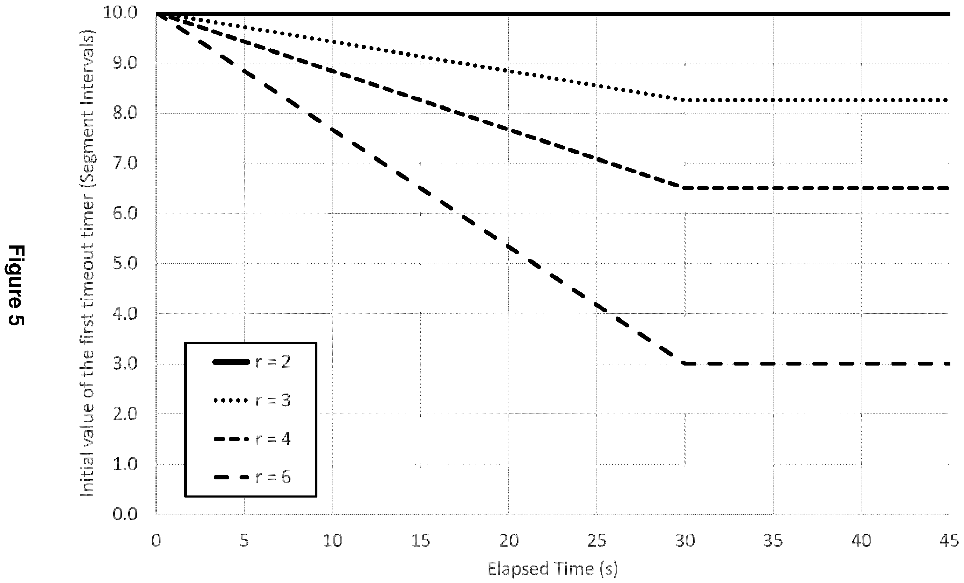

Examples of how the initial value of *the third_timeout_timer* varies according to elapsed time for four values of *bandwidth_estimate,* r, is shown in Figure 5.

The proxy 112 could also set the initial value of the *third_timeout_timer* dependent on how long it had been joined to the multicast channel. For example, if the proxy 112 had been joined to the multicast channel for only a short period of time, it could set the initial value of *third_timeout_timer* to a longer duration than that calculated from equations (5) and (6), to prevent joining the multicast channel again for a longer period of time. But if it had been joined to the multicast channel for a longer period of time, it could set the initial value of *third_timeout_timer* to the value calculated from equations (5) and (6).

As an example, if the proxy 112 had been joined to the multicast channel for a period of time greater than two minutes, it could set the initial value of *third_timeout_timer* to the value calculated from equations (5) and (6), and otherwise set the initial value of *third_timeout_timer* to the value calculated from equations (5) and (6) plus ten segment periods.

Turning now to the flow chart of Figure 3. Figure 3 shows a flow chart summarising the steps of an example of the present method in which the proxy 112 determines whether to join the multicast channel either for the first time, or again after having left the multicast channel. The steps of Figure 3 largely mirror the methods already described above.

Starting at step 300, the proxy 112 determines that a multicast channel is available to join, or the proxy 112 has just left a multicast channel (for example following from step 254 in the first example earlier), and sets some initial parameter values.

If the proxy 112 had previously been joined to a multicast channel, the proxy 112 sets the value of a parameter *leave_time* equal to the current time, that is, the time at which the proxy 112 left the multicast channel. Otherwise, the parameter *leave_time* is not set.

The proxy 112 determines the parameter *bandwidth_estimate* using one of the methods described earlier, or if the proxy 112 had been joined to a multicast channel previously, then using the *bandwidth_estimate* from step 254. This *bandwidth estimate* takes into account that the proxy 112 is not joined to the multicast channel, and more bandwidth is therefore available for unicast delivery of content segments.

The proxy 112 sets an initial value of *second_timeout_timer* and the *third_timeout_timer* (as described above) and starts both timers counting down. They will both count down towards zero until they expire or are restarted. The initial value of *second_timeout_timer* is a shorter duration than the initial value of the *third_timeout_timer.*

In step 302, the proxy 112 receives a request from the client device 114 for a content segment stored at the unicast server 110. The proxy 112 intercepts this request.

In step 304, the proxy 112 obtains the requested content segment by unicast from the unicast server 110. The proxy 112 determines the rate at which the content segment is received from the unicast server 110 and stores the determined value in the parameter *delivery_rate.*

In step 306, the proxy 112 updates its estimate of the bandwidth, stored in parameter *bandwidth estimate,* of the connection between it and the unicast server 110. As already described, the proxy 112 could determine the value of *bandwidth_estimate* in any of many different ways described earlier using one or more previously determined values of *delivery_rate.*

In step 308, the proxy 112 forwards the content segment received from the unicast server 110 to the client device 114 as a unicast response to the request from the client device 114. Once the client device 114 receives this content segment, it can be played out.

In step 310, the proxy 112 determines whether the content segment requested by the client device 114 is available on the multicast channel. The proxy 112 may, for example, determine this comparing the URL that the client device 114 has used to request the content segment with a matching pattern that relates to the content stream or streams transmitted on the multicast channel. If the content segment has been made available on the multicast channel, then flow passes to step 312, otherwise if not then flow passes back to step 302 to repeat the processing for the next client request for content segment.

In step 312, the proxy 112 resets *second_timeout_timer* to an initial value and starts the timer counting down again. The proxy 112 may use the same initial value of *second_timeout_timer* as used previously in this step or in steps 300 or 322, or may calculate a new value, using for example the value of *bandwidth_estimate,* the time that has elapsed since leaving the multicast channel and/or parameters of the period when previously joined to the multicast channel, for example how long it was joined to the multicast channel and how many requests for content segments from the client device 114 were for data that was stored in the cache at the proxy 112 at the time of the request. Flow then passes back to step 302 to repeat the processing for the next client request for content segment.

It can be seen that steps 302 to 312 are thus repeated in a loop. Meanwhile, there are two processes that the proxy 114 operates continuously in the background after step 300. These are shown in Figures 3a and 3b, with a process in Figure 3b being responsible for issuing a request to join the multicast channel.

Figure 3a starts at step 320, which continuously checks to see if the *second_timeout_timer* has expired, and if it has not then processing loops back to itself in step 320. However, if *second_timeout_timer* has expired (counted down to zero), then flow passes to step 322.

In step 322, the proxy 112 resets the *second_timeout_timer* and the *third_timeout_timer* to respective initial values, and starts them both counting down again before passing back to step 320. The proxy 112 may use the same initial value of *second_timeout_timer* as used previously in this step or in steps 300 or 312, or may calculate a new value. The proxy 112 may use the same initial value of *third_timeout_timer* as used previously in this step or in step 300, or may calculate a new value. The parameters that could be used in the calculation of new values are discussed in the description of step 312.

The effect of steps 320 and 322 is that the *third_timeout_timer* will always be reset by this process unless *second_timeout_timer* is reset sufficiently elsewhere, for example by step 312.

Figure 3b starts at step 330, and continuously checks to see if *third_timeout_timer* has expired, and if it has not then processing loops back to itself in step 330. However, if *third_timeout_timer* has expired (counted down to zero), then flow passes to step 332.

As described earlier, if *third_timeout_timer* expires, the proxy 112 will join the multicast channel. Therefore, in step 332, the proxy initiates the process of joining the multicast channel. This may be done for example by issuing an IGMP Join request for the multicast channel.

In step 334, the proxy 112 will start receiving content data on the multicast channel and stores that data in the cache.

The background process ends in step 334.

However, instead of ending in step 334, processing may pass to step 200 of Figure 2, which is the start of a method of determining whether to leave the multicast channel. Alternatively, other methods of handling data received on the multicast channel, of handling requests from the client device 114 and of determining whether to leave the multicast channel could be used.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of managing content delivery to a client device by a network element, said content comprising a sequence of segments and wherein each of the segments is encoded at a plurality of quality levels, said method comprising:

    i) determining that there is multicast channel available to join, starting a first timeout timer and a second timeout timer;

    ii) receiving unicast requests for segments encoded at one or more of the quality levels from a client device, forwarding the requests to a unicast content source, receiving the requested segments, and transmitting the requested segments to the client device by unicast;

    iii) restarting the first timeout timer when a request for a segment is received from the client device that matches a segment that is available on the multicast channel;

    iv) restarting the first timeout timer and the second timeout timer if the first timeout timer has expired; and

    v) repeating steps ii) to iv) until the second timeout timer expires, and when the second timeout timer expires joining the multicast channel, receiving segments over multicast, and transmitting segments requested by the client device to the client device by unicast.

2. A method according to claim 1 further comprising determining the bandwidth between the unicast content source and the network element, wherein the second timeout timer is set in dependence on the determined bandwidth.

3. A method according to claim 2, wherein the second timeout timer is set to a shorter duration when the determined bandwidth is higher and is set to a longer duration when the determined bandwidth is lower.

4. A method according to claim 2 or claim 3, wherein the bandwidth between the unicast content source and the network element is determined using the bit rate at which the one or more segments is received by the network element from the unicast content source.

5. A method according to claim any preceding claim, wherein the method further comprises first joining the multicast channel and subsequently leaving the multicast channel.

6. A method according to claim 5, wherein the second timeout timer is set in dependence on the time since leaving the multicast channel.

7. A method according to claim 6, wherein the second timeout timer is set to a longer duration if the time since leaving the multicast channel is shorter and is set to a shorter duration when the time since leaving the multicast channel is longer.

**8.** A method according to claim 5, wherein the second timeout timer is set in dependence on how long the network element was joined to the multicast channel.

**9.** A method according to claim 8, wherein the second timeout timer is set to a longer duration if the network element was joined for a shorter period of time, and a shorter duration if the network element was joined for a longer period of time.

**10.** A method according to any preceding claim further comprising determining the times between consecutive requests for segments from the client and setting the first timeout timer in dependence on one or more of these determined times.

**11.** A network element for managing content delivery to a client device, said content comprising a sequence of segments and wherein each of the segments is encoded at a plurality of quality levels, said network element adapted to:

determine that there is multicast channel available to join, and start a first timeout timer and a second timeout timer;

receive unicast requests for segments encoded at one or more of the quality levels from a client device, forward the requests to a unicast content source, receive the requested segments, and transmit the requested segments to the client device by unicast;

restart the first timeout timer when a request for a segment is received from the client device that matches a segment that is available on the multicast channel;

restart the first timeout timer and the second timeout timer if the first timeout timer has expired; and

repeat steps ii) to iv) until the second timeout timer expires, and when the second timeout timer expires joining the multicast channel, receive segments over multicast, and transmit segments requested by the client device to the client device by unicast.

Figure 1

**Key**

102 Content Source
104 Content Encoder
106 Multicast Transmitter
110 Unicast Server
112 Proxy
114 Client Device

⟶ Content Production

⟷ Bi-directional unicast

---⟶ Uni-directional multicast

200 — Set *join_time*, set *bandwidth_estimate*, set *phase* = start-up, start *first_timeout_timer*

202 — Proxy receives and stores multicast data, and stores label of first segment received

204 — Proxy receives a segment request from a client

206 — Is the request for a segment that has been transmitted on the multicast channel? — Yes

208 — Is the segment stored in the proxy's cache?

210 — Yes → Set *phase* = normal

212 — Restart *first_timeout_timer*

214 — Respond to client with stored data

216 — No → Is *phase* = start-up?

218 — Yes → Is the first segment still stored in the cache? — No

220 — No → Set *phase* = normal

222 — Proxy restarts *first_timeout_timer*

224 — Proxy obtains segment from unicast server, and determines *delivery_rate*

226 — Proxy updates *bandwidth_estimate* using *delivery_rate*

228 — Proxy delivers segment to the client

**Figure 2**

**Figure 2a**

300 — 
Proxy sets *leave_time, bandwidth_estimate,* and starts *second_timeout_timer* and *third_timeout_timer*

302 — 
Proxy receives a client request for a segment

304 — 
Proxy obtains segment from unicast server, and determines *delivery_rate*

306 — 
Proxy updates *bandwidth_estimate* using *delivery_rate*

308 — 
Proxy delivers segment to the client

310 — 
No ← Is the request for a segment that has been transmitted on the multicast channel?

312 — 
Yes

Proxy resets and restarts *second_timeout_timer*

## Figure 3

320 ⌐

Has *second_timeout_timer* expired?  No

Yes

322 ⌐

Proxy resets *second_timeout_timer* and *third_timeout_timer*

**Figure 3a**

330 ⌐

Has *third_timeout_timer* expired?  No

Yes

332 ⌐

Proxy issues IGMP Join Request

334 ⌐

Proxy receives and stores multicast data

To Step 200

**Figure 3b**

**Figure 4**

**Figure 5**

Europäisches
Patentamt

European
Patent Office

Office européen
des brevets

# EUROPEAN SEARCH REPORT

**Application Number**

EP 23 16 5962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/352305 A1 (BOWEN GARETH [GB] ET AL) 6 December 2018 (2018-12-06)<br>* paragraph [0022] *<br>* paragraph [0035] – paragraph [0038] *<br>* paragraph [0056] *<br>* paragraph [0044] *<br>----- | 1-11 | INV.<br>H04L65/765<br>H04L65/611<br>H04W4/06 |
| A | WO 2021/226757 A1 (HUAWEI TECH CO LTD [CN]) 18 November 2021 (2021-11-18)<br>* page 1, line 1 – page 12, line 11 *<br>----- | 1-11 | |

**TECHNICAL FIELDS SEARCHED (IPC)**

H04L
H04W

The present search report has been drawn up for all claims

| Place of search | Date of completion of the search | Examiner |
|---|---|---|
| The Hague | 15 June 2023 | Walker Pina, J |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 23 16 5962

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2023

| Patent document cited in search report | Publication date | Patent family member(s) | Publication date |
|---|---|---|---|
| US 2018352305 A1 | 06-12-2018 | NONE | |
| WO 2021226757 A1 | 18-11-2021 | NONE | |

EPO FORM P0459

For more details about this annex : see Official Journal of the European Patent Office, No. 12/82